# EUROPEAN PATENT APPLICATION

(11) **EP 4 765 284 A1**
(43) Date of publication of application: **24.06.2026**
(21) Application number: 24864485.8
(22) Date of filing: 31.08.2024
(51) Int. Cl.: H01M 10/0525, H01M 50/105, H01M 10/058, H01M 50/586, H01M 50/593

(54) **SECONDARY BATTERY AND ELECTRONIC DEVICE**

(30) Priority: 12.09.2023 CN 202311175186
(71) Applicant: Ningde Amperex Technology Limited, Ningde, Fujian 352100 (CN)
(72) Inventor: WANG, Jianming, Ningde, Fujian 352100 (CN); CHEN, Jia, Ningde, Fujian 352100 (CN)
(74) Representative: Kraus & Lederer PartGmbB
(86) International application number: PCT/CN2024/116177
(87) International publication number: WO 2025/055763

(57) **Abstract**

A secondary battery and an electronic device are provided. The secondary battery includes a first packaging portion and a second packaging portion, the first packaging portion including a first region and a second region connected to each other, and the second packaging portion including a third region and a fourth region connected to each other. The second region and the fourth region form a main body portion for accommodating an electrode assembly, and the first region and the third region are connected to form a sealing portion for sealing the main body portion, the sealing portion including a first sealing portion and a second sealing portion. A distance between a first metal plate and a second metal plate is less than 1.5 mm. A first insulating layer covers a surface of the first metal plate and is connected to the first region. A second insulating layer covers a surface of the second metal plate and is connected to the third region. Along a first direction, a sealing film is disposed between the first insulating layer and the second insulating layer. The sealing film includes a first surface facing the first region and a second surface facing the third region, where the first surface is bonded to the first insulating layer to form the first sealing portion, and the second surface is bonded to the second insulating layer to form the second sealing portion.

## Description

### TECHNICAL FIELD

This application relates to the technical field of pouch batteries, and in particular, to a secondary battery and an electronic device including the secondary battery.

### BACKGROUND

Secondary batteries, especially lithium-ion batteries, are widely used in electric vehicles and consumer electronic products due to their advantages of high energy density, high output power, and long cycle life. With the rapid development of electronic products toward high integration and lightweight design, there is an increasing demand for battery miniaturization.

### SUMMARY

An objective of this application is to provide a secondary battery in which a first metal plate and a second metal plate extend from the same side and can meet the requirements for battery miniaturization.

A first aspect of this application provides a secondary battery, including an electrode assembly, a packaging bag, a first metal plate, a second metal plate, a first insulating layer, a second insulating layer, and a sealing film. The packaging bag includes a first packaging portion and a second packaging portion arranged oppositely, the first packaging portion including a first region and a second region connected to each other, and the second packaging portion including a third region and a fourth region connected to each other. The second region and the fourth region arranged along a first direction form a main body portion for accommodating the electrode assembly, the first region and the third region are connected to form a sealing portion for sealing the main body portion, where the sealing portion includes a first sealing portion and a second sealing portion that are located on the same side of the secondary battery, and the first direction is a thickness direction of the electrode assembly. The first metal plate is electrically connected to the electrode assembly and extends out of the packaging bag through the first sealing portion along a second direction perpendicular to the first direction. The second metal plate is electrically connected to the electrode assembly and extends out of the packaging bag through the second sealing portion along the second direction. In a third direction perpendicular to the first direction and the second direction, a distance between the first metal plate and the second metal plate is less than 1.5 mm. The first insulating layer covers a surface of the first metal plate and is connected to the first region. The second insulating layer covers a surface of the second metal plate and is connected to the third region. Along the first direction, the sealing film is disposed between the first insulating layer and the second insulating layer. The sealing film includes a first surface facing the first region and a second surface facing the third region, where the first surface is bonded to the first insulating layer to form the first sealing portion, and the second surface is bonded to the second insulating layer to form the second sealing portion.

In the secondary battery provided by this application, the first metal plate and the second metal plate extend from the same side of the secondary battery and are separated by the sealing film disposed between the first insulating layer and the second insulating layer, such that even when the distance between the first metal plate and the second metal plate is less than 1.5 mm, the risk of short circuit caused by contact due to the small spacing between the first metal plate and the second metal plate can be reduced, thereby expanding the application range of the secondary battery, meeting the design requirements for narrow secondary batteries, and improving energy density. Additionally, the sealing film is bonded to the first insulating layer and the second insulating layer, which facilitates improving sealing strength.

According to some embodiments of this application, the first surface is bonded to the first region, and the second surface is bonded to the third region, which facilitates improving sealing strength.

According to some embodiments of this application, when viewed along the first direction, the first metal plate and the second metal plate have an overlapping portion, further reducing the width of the secondary battery, and facilitating miniaturization.

According to some embodiments of this application, in the third direction, the sealing film includes a first edge and a second edge opposite to each other, the first insulating layer includes a first end located on the side of the first edge, and the second insulating layer includes a second end located on the side of the second edge; and in the third direction, a distance by which the first edge extends beyond the first end is W1, and a distance by which the second edge extends beyond the second end is W2, where W1 ≥ 1 mm and W2 ≥ 1 mm. When W1 and W2 are within the above ranges, in the third direction, the entire first metal plate is completely separated from the entire second metal plate by the sealing film, reducing the risk of short circuit caused by contact between the first metal plate and the second metal plate.

According to some embodiments of this application, in the second direction, the sealing film includes a third edge and a fourth edge arranged oppositely in the second direction, and in the second direction, the third edge is closer to the electrode assembly than the fourth edge; and the first insulating layer includes a third end and a fourth end arranged oppositely in the second direction, and in the second direction, the third end is closer to the electrode assembly than the fourth end.

According to some embodiments of this application, in the second direction, a distance by which the third edge extends beyond the third end is L1, and a distance by which the fourth edge extends beyond the fourth end is L2, where -1.5 mm ≤ L1 ≤ 0.5 mm and -1.5 mm ≤ L2 ≤ 0.5 mm. When L1 and L2 are within the above ranges, in the second direction, the entire first metal plate is separated from the entire second metal plate by the sealing film, reducing the risk of short circuit caused by contact between the first metal plate and the second metal plate.

According to some embodiments of this application, in the second direction, the sealing portion includes a fifth edge and a sixth edge arranged oppositely in the second direction, and in the second direction, the fifth edge is farther from the electrode assembly than the sixth edge; and in the second direction, a distance by which the fourth end extends beyond the fifth edge is L3, where 0.05 mm ≤L3 ≤ 2 mm. When L3 is within the above range, part of the first insulating layer is exposed outside the packaging bag, which can reduce the risk of misaligned sealing at the edge of the packaging bag during sealing, facilitating sealing. Moreover, the smaller the exposed length of the first insulating layer, the less space the first insulating layer occupies, which is more conducive to improving energy density.

According to some embodiments of this application, in the third direction, the first metal plate includes a fifth end and a sixth end opposite to each other, the first insulating layer includes a first end located on the side of the fifth end and a seventh end located on the side of the sixth end; and in the third direction, a distance by which the first end extends beyond the fifth end is W3, and a distance by which the seventh end extends beyond the sixth end is W4, where 0.5 mm ≤ W3 ≤ 3 mm and 0.5 mm ≤ W4 ≤ 3 mm.

According to some embodiments of this application, in the second direction, the electrode assembly includes a seventh edge, and the seventh edge and the third end are located on the same side of the secondary battery in the second direction; and in the second direction, a distance by which the third end extends beyond the seventh edge is L4, where -2.5 mm ≤ L4 ≤ 1 mm. When L4 is within the above range, the risk of wrinkles at the electrode sheet of the electrode assembly due to contact between the electrode assembly and the first insulating layer or the risk of issues such as lithium precipitation caused by the first insulating layer covering the electrode sheet due to excessive contact between the first insulating layer and the electrode assembly can be reduced.

According to some embodiments of this application, in the second direction, the sealing film does not overlap with the electrode assembly to reduce the risk of wrinkles at the electrode sheet of the electrode assembly due to contact with the sealing film.

According to some embodiments of this application, the sealing film includes a first layer, a second layer, and a third layer arranged in a stacked manner.

According to some embodiments of this application, the first layer and the third layer each independently include at least one of polypropylene, modified polypropylene, polyethylene, ethylene-propylene copolymer, ethylene-vinyl acetate copolymer, or ethylene-ethyl acrylate copolymer.

According to some embodiments of this application, the second layer includes a metal layer.

According to some embodiments of this application, the packaging bag is an aluminum-plastic film or a steel-plastic film.

According to some embodiments of this application, the first insulating layer and the second insulating layer each independently include at least one of polyethylene, polypropylene, polyethylene terephthalate, phenolic resin, melamine resin, unsaturated polyester resin, epoxy resin, silicone resin, or polyurethane.

A second aspect of this application provides an electronic device including the secondary battery according to any of the foregoing embodiments.

### DETAILED DESCRIPTION OF DRAWINGS

FIG. 1 is a view of a secondary battery provided by an embodiment of this application observed along a first direction.
FIG. 2 is a schematic diagram of a packaging bag provided by an embodiment of this application before sealing.
FIG. 3 is a cross-sectional view of the secondary battery shown in FIG. 1 along III-III.
FIG. 4 is a cross-sectional view of the secondary battery shown in FIG. 1 along IV-IV.
FIG. 5 is a cross-sectional view of a secondary battery provided by another embodiment of this application.

### Reference signs of main components

| | |
|---|---|
| Secondary battery | 100 |
| Electrode assembly | 10 |
| Packaging bag | 20 |
| First metal plate | 30 |
| Second metal plate | 40 |
| First packaging portion | 20a |
| Second packaging portion | 20b |
| First region | 20a1 |
| Second region | 20a2 |
| Third region | 20b1 |
| Fourth region | 20b2 |
| Recess | S1 |
| Main body portion | 21 |
| Sealing portion | 22 |
| Sealing film | 50 |
| Sealing layer | 201 |
| Metal layer | 202 |
| Protective layer | 203 |
| First insulating layer | 60 |
| Second insulating layer | 70 |
| First sealing portion | 221 |
| Second sealing portion | 222 |
| First surface | 51 |
| Second surface | 52 |
| First layer | 501 |
| Second layer | 502 |
| Third layer | 503 |
| First edge | 50a |
| Second edge | 50b |
| Third edge | 50c |
| Fourth edge | 50d |
| Fifth edge | 22a |
| Sixth edge | 22b |
| Seventh edge | 10a |
| First end | 60a |
| Second end | 70a |
| Third end | 60b |
| Fourth end | 60c |
| Fifth end | 30a |
| Sixth end | 30b |
| Seventh end | 60d |
| Eighth end | 70b |
| Ninth end | 70c |
| Tenth end | 40a |
| Eleventh end | 40b |
| Twelfth end | 70d |
| First direction | Z |
| Second direction | Y |
| Third direction | X |

This application is further described with reference to the accompanying drawings in the following specific embodiments.

### DETAILED DESCRIPTION

The following clearly describes in detail the technical solutions in some embodiments of this application. Apparently, the described embodiments are some rather than all of embodiments of this application. Unless otherwise defined, all technical and scientific terms used herein shall have the same meanings as commonly understood by persons skilled in the art to which this application relates. The terms used in the specification of this application are intended to merely describe the specific embodiments rather than to limit this application.

The following describes some embodiments of this application in detail. However, this application may be embodied in many different implementations and should not be construed as being limited to the example embodiments set forth herein. Rather, these example embodiments are provided so that this application can be conveyed to persons skilled in the art thoroughly and in detail.

In addition, in the accompanying drawings, sizes or thicknesses of various components and layers may be exaggerated for brevity and clarity. Throughout the text, the same numerical values represent the same elements. As used herein, the term "and/or" includes any and all combinations of one or more associated items listed. In addition, it should be understood that when an element A is referred to as being "connected to" an element B, the element A may be directly connected to the element B, or an intervening element C may be present therebetween such that the element A and the element B are indirectly connected to each other.

Further, the use of "may" in the descriptions of some embodiments of this application means "one or more embodiments of this application".

The technical terms used herein are merely intended to describe specific embodiments rather than to limit this application. As used herein, the singular forms are intended to also include the plural forms, unless otherwise clearly stated in the context. It should be further understood that the term "including", when used in this specification, specifies the presence of stated features, numbers, steps, operations, elements, and/or components but does not preclude the presence or addition of one or more other features, numbers, steps, operations, elements, components, and/or combinations thereof.

It should be understood that although the terms first, second, third, and the like may be used herein to describe various elements, components, regions, layers, and/or portions, these elements, components, regions, layers, and/or portions should not be limited by these terms. These terms are used to distinguish one element, component, region, layer, or portion from another element, component, region, layer, or portion. Therefore, the first element, component, region, layer, or portion discussed below may be referred to as the second element, component, region, layer, or portion without departing from the teachings of the example embodiments.

In this application, the fusion of element A to element B refers to heating element A and element B to soften and melt the same for bonding.

In this application, a first direction Z refers to a thickness direction of the electrode assembly, a second direction Y refers to a length direction of the electrode assembly, and a third direction X refers to a width direction of the electrode assembly.

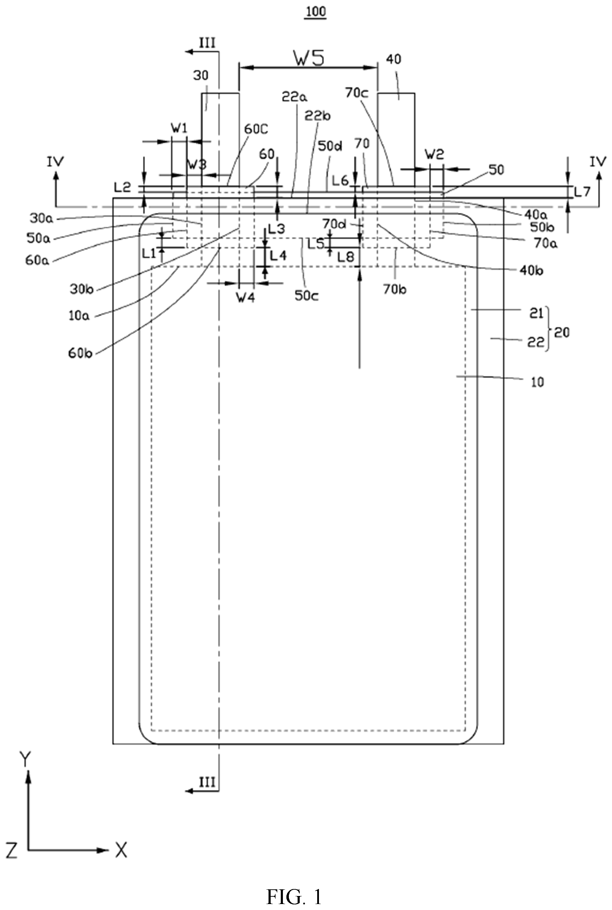

Referring to FIG. 1, an embodiment of this application provides a secondary battery 100, including an electrode assembly 10, a packaging bag 20, a first metal plate 30, and a second metal plate 40. The electrode assembly 10 is accommodated within the packaging bag 20. The first metal plate 30 and the second metal plate 40 are respectively electrically connected to the electrode assembly 10 and extend out of the packaging bag 20 along the second direction Y to connect to external components. The first metal plate 30 and the second metal plate 40 are located on the same side of the secondary battery 100 in the second direction Y.

The electrode assembly 10 includes a positive electrode sheet, a negative electrode sheet, and a separator disposed between the positive electrode sheet and the negative electrode sheet. The positive electrode sheet, the separator, and the negative electrode sheet may be sequentially stacked to form an electrode assembly 10 with a laminated structure, or the positive electrode sheet, the separator, and the negative electrode sheet may be stacked and wound to form an electrode assembly 10 with a wound structure, which is not limited in this application.

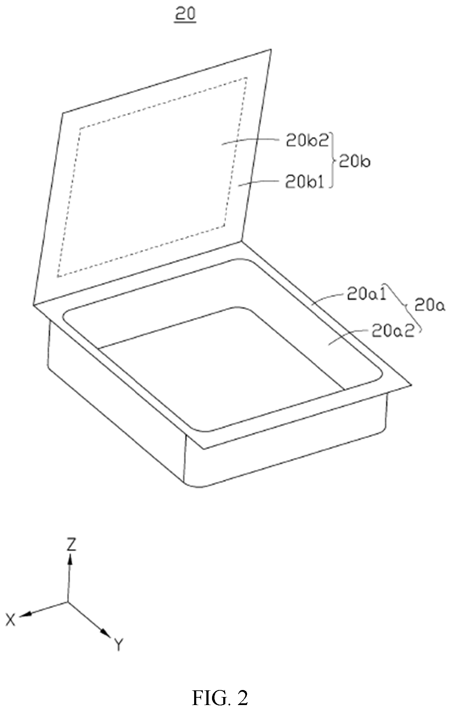

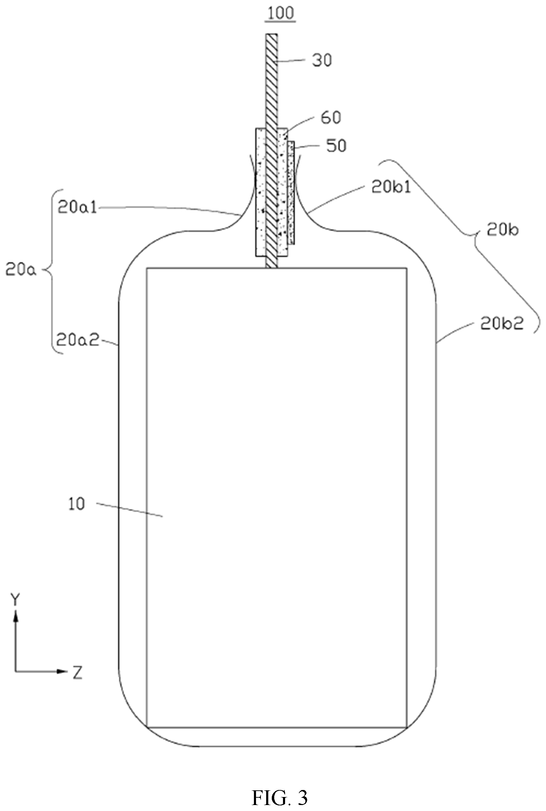

Referring to FIGs. 1 to 3, the packaging bag 20 includes a first packaging portion 20a and a second packaging portion 20b arranged oppositely in the first direction Z perpendicular to the second direction Y, and the first packaging portion 20a and the second packaging portion 20b are integrally formed and sealed to form the packaging bag 20. The first packaging portion 20a includes a first region 20a1 and a second region 20a2 connected to each other, with three side edges of the second region 20a2 surrounded by the first region 20a1. The second packaging portion 20b includes a third region 20b1 and a fourth region 20b2 connected to each other, with three side edges of the fourth region 20b2 surrounded by the third region 20b1. The second region 20a2 and the fourth region 20b2 are arranged along the first direction Z. The fourth region 20b2 is substantially flat, and the second region 20a2 is provided with a recess S1 for accommodating the electrode assembly 10. The second region 20a2 and the fourth region 20b2 form a main body portion 21 for accommodating the electrode assembly 10. The first region 20a1 and the third region 20b1 are arranged along the first direction Z and connected to form a sealing portion 22 for sealing the main body portion 21.

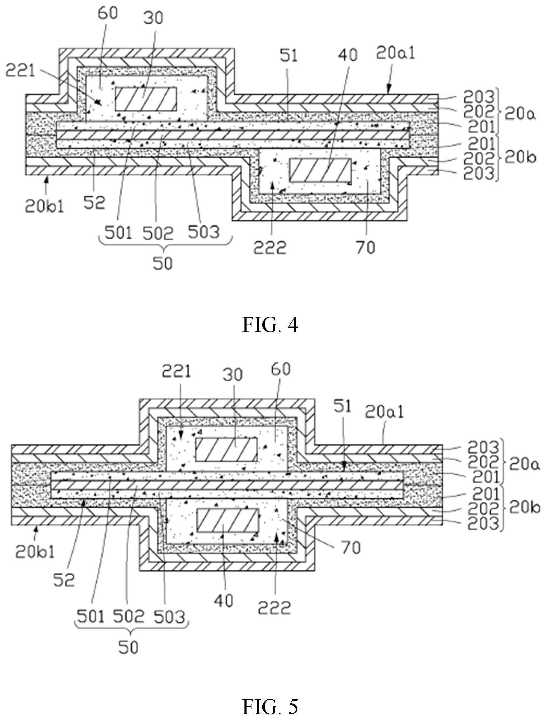

Referring to FIG. 4, the packaging bag 20 has a layered film structure. Specifically, both the first packaging portion 20a and the second packaging portion 20b include a sealing layer 201, a metal layer 202, and a protective layer 203 arranged in a stacked manner, with the sealing layers 201 disposed close to the electrode assembly 10, and the protective layer 203 disposed away from the electrode assembly 10 and exposed outside the secondary battery 100. The material of the protective layer 203 may be a polymer resin for protecting the metal layer 202. The material of the metal layer 202 may be aluminum, steel, or the like, for preventing moisture penetration from the external environment and enhancing the strength of the packaging bag 20. The material of the sealing layer 201 may be a polymer, such as polypropylene, polyamide, or the like. The sealing layers 201 located in the first region 20a1 and the third region 20b1 may be directly connected by thermal fusion to form the sealing portion 22. In other embodiments, a fusible element is disposed between the sealing layers 201 located in the first region 20a1 and the third region 20b1, so that the sealing layers 201 located in the first region 20a1 and the third region 20b1 are indirectly connected by thermal fusion to form the sealing portion 22. In another embodiment, the sealing layers 201 located in the first region 20a1 and the third region 20b1 are connected by adhesive bonding to form the sealing portion. For example, an adhesive layer is disposed between the sealing layers 201 located in the first region 20a1 and the third region 20b1, and the two layers are bonded together through the adhesive layer. In this embodiment, the packaging bag 20 is an aluminum-plastic film or a steel-plastic film.

Referring to FIG. 4, the secondary battery 100 further includes a first insulating layer 60 and a second insulating layer 70. The first insulating layer 60 covers a surface of the first metal plate 30, and the first metal plate 30 is connected to the first region 20a1 of the packaging bag 20 through the first insulating layer 60. The second insulating layer 70 covers a surface of the second metal plate 40, and the second metal plate 40 is connected to the third region 20b1 of the packaging bag 20 through the second insulating layer 70. Specifically, the first insulating layer 60 is integrally formed and covers two surfaces of the first metal plate 30 facing the first region 20a1 and the third region 20b1, and the portion of the first insulating layer 60 covering the surface of the first metal plate 30 facing the first region 20a1 is connected to the first region 20a1. The second insulating layer 70 is integrally formed and covers two surfaces of the second metal plate 40 facing the first region 20a1 and the third region 20b1, and the portion of the second insulating layer 70 covering the surface of the second metal plate 40 facing the third region 20b1 is connected to the third region 20b1. In this embodiment, the first insulating layer 60 and the second insulating layer 70 are spaced apart in the first direction Z.

The first insulating layer 60 and/or the second insulating layer 70 may include at least one of polyethylene, polypropylene, polyethylene terephthalate, phenolic resin, melamine resin, unsaturated polyester resin, epoxy resin, silicone resin, or polyurethane. In this embodiment, the first insulating layer 60 is fused to the sealing layer 201 of the packaging bag 20 to achieve the connection between the first insulating layer 60 and the first region 20a1; and the second insulating layer 70 is fused to the sealing layer 201 of the packaging bag 20 to achieve the connection between the second insulating layer 70 and the third region 20b1. In other embodiments, the first insulating layer 60 or the second insulating layer 70 may be connected to the packaging bag 20 by adhesive bonding, for example, through an adhesive layer.

Referring to FIGs. 1 and 4, the sealing portion 22 includes a first sealing portion 221 and a second sealing portion 222. The first sealing portion 221 and the second sealing portion 222 are located on the same side of the secondary battery 100. The secondary battery 100 further includes a sealing film 50 disposed between the first insulating layer 60 and the second insulating layer 70 in the first direction Z. The sealing film 50 includes a first surface 51 facing the first region 20a1 and a second surface 52 facing the third region 20b1. The first sealing portion 221 is formed by fusing the first surface 51 of the sealing film 50 to the first insulating layer 60. Specifically, the first surface 51 is bonded to the portion of the first insulating layer 60 covering the surface of the first metal plate 30 facing the third region 20b1. The second sealing portion 222 is formed by bonding the second surface 52 of the sealing film 50 to the second insulating layer 70. Specifically, the second surface 52 is connected to the portion of the second insulating layer 70 covering the surface of the second metal plate 40 facing the first region 20a1. The first metal plate 30 extends out of the packaging bag 20 through the first sealing portion 221. The second metal plate 40 extends out of the packaging bag 20 through the second sealing portion 222. The first surface 51 of the sealing film 50 is also bonded to the first region 20a1, and the second surface 52 of the sealing film 50 is also bonded to the third region 20b1, which facilitates improving sealing strength.

Referring to FIG. 4, when viewed along the first direction Z, in the third direction X perpendicular to the second direction Y and the first direction Z, the first metal plate 30 is separated from the second metal plate 40. The portion of the second surface 52 corresponding to the first metal plate 30 is connected to the third region 20b1, and the portion of the first surface 51 corresponding to the second metal plate 40 is connected to the first region 20a1. In the third direction X, a distance W5 between the first metal plate 30 and the second metal plate 40 is less than 1.5 mm. In this application, the distance W5 between the first metal plate 30 and the second metal plate 40 refers to the distance between the two close/adjacent edges of the first metal plate 30 and the second metal plate 40 spaced apart in the third direction X. The spaced-apart first metal plate 30 and second metal plate 40 are separated by the first region 20a1, the sealing film 50, and the third region 20b1 bonded to each other, such that even when the distance between the first metal plate 30 and the second metal plate 40 is less than 1.5 mm, short circuit caused by contact due to the small spacing between the first metal plate 30 and the second metal plate 40 is prevented, meeting the design requirements for narrow secondary batteries.

Referring to FIG. 5, in another embodiment, when viewed along the first direction Z, the first metal plate 30 and the second metal plate 40 have an overlapping portion. At least part of the second surface 52 corresponding to the first metal plate 30 is connected to the second insulating layer 70, and at least part of the first surface 51 corresponding to the second metal plate 40 is connected to the first insulating layer 60. In the third direction X, the distance between the first metal plate 30 and the second metal plate 40 is 0, further reducing the width of the secondary battery 100 in the third direction X, facilitating miniaturization. In this case, the first metal plate 30 is separated from the second metal plate 40 by the sealing film 50, reducing the risk of short circuit caused by contact between the first metal plate 30 and the second metal plate 40.

Referring to FIG. 4, the sealing film 50 has a layered film structure. Specifically, the sealing film 50 includes a first layer 501, a second layer 502, and a third layer 503 arranged in a stacked manner. The first layer 501 is disposed close to the first region 20a1 of the first packaging portion 20a, and a surface of the first layer 501 facing away from the second layer 502 is used as the first surface 51 of the sealing film 50. The third layer 503 is disposed close to the third region 20b1 of the second packaging portion 20b, and a surface of the third layer 503 facing away from the second layer 502 is used as the second surface 52 of the sealing film 50. The sealing film 50 is bonded to the sealing layer 201 or the insulating layer through the first layer 501 or the second layer 502. The first layer 501 and/or the third layer 503 includes at least one of polypropylene, modified polypropylene, polyethylene, ethylene-propylene copolymer, ethylene-vinyl acetate copolymer, or ethylene-ethyl acrylate copolymer. The second layer 502 includes a metal layer for supporting the first layer 501 and the third layer 503 and for preventing moisture penetration from the external environment. In this embodiment, the second layer 502 is a metal layer, and the material of the metal layer may be aluminum, steel, or the like. In other embodiments, the second layer 502 includes multiple metal layers and a polymer layer sandwiched between adjacent metal layers. In one embodiment, the sealing film 50 is an aluminum-plastic film or a steel-plastic film.

Referring to FIG. 1, in the third direction X, the sealing film 50 includes a first edge 50a and a second edge 50b opposite to each other, where the first insulating layer 60 includes a first end 60a located on the side of the first edge 50a, and the second insulating layer 70 includes a second end 70a located on the side of the second edge 50b. In the third direction X, a distance by which the first edge 50a extends beyond the first end 60a is W1, and a distance by which the second edge 50b extends beyond the second end 70a is W2, where W1 ≥ 1 mm and W2 ≥ 1 mm. When W1 and W2 are within the above ranges, in the third direction X, the entire first metal plate 30 is completely separated from the entire second metal plate 40 by the sealing film 50, reducing the risk of short circuit caused by contact between the first metal plate 30 and the second metal plate 40.

Referring to FIG. 1, in the second direction Y, the sealing film 50 includes a third edge 50c and a fourth edge 50d arranged oppositely, and the third edge 50c is closer to the electrode assembly 10 than the fourth edge 50d. The first insulating layer 60 includes a third end 60b and a fourth end 60c arranged oppositely, and the third end 60b is closer to the electrode assembly 10 than the fourth end 60c. In the second direction Y, a distance by which the third edge 50c extends beyond the third end 60b is L1, and a distance by which the fourth edge 50d extends beyond the fourth end 60c is L2, where -1.5 mm ≤ L1 ≤ 0.5 mm and -1.5 mm ≤ L2 ≤ 0.5 mm. In the second direction Y, the second insulating layer 70 includes an eighth end 70b and a ninth end 70c arranged oppositely, and the eighth end 70b is closer to the electrode assembly 10 than the ninth end 70c. In the second direction Y, a distance by which the third edge 50c extends beyond the eighth end 70b is L5, and a distance by which the fourth edge 50d extends beyond the ninth end 70c is L6, where -1.5 mm ≤ L5 ≤ 0.5 mm and -1.5 mm ≤ L6 ≤ 0.5 mm. When L1/L2/L5/L6 is less than 0, an orthographic projection in the first direction Z of the edge of the first insulating layer 60/second insulating layer 70 in the second direction Y falls within the sealing film 50; when L1/L2/L5/L6 is equal to 0, the edge of the first insulating layer 60/second insulating layer 70 in the second direction Y is aligned with the edge of the sealing film 50 in the second direction Y; and when L1/L2/L5/L6 is greater than 0, an orthographic projection in the first direction Z of the edge of the sealing film 50 in the second direction Y falls within the first insulating layer 60/second insulating layer 70. When L1, L2, L5, and L6 are within the above ranges, in the second direction Y, the entire first metal plate 30 is completely separated from the entire second metal plate 40 by the sealing film 50, reducing the risk of short circuit caused by contact between the first metal plate 30 and the second metal plate 40.

Referring to FIG. 1, in the second direction Y, the sealing portion 22 includes a fifth edge 22a and a sixth edge 22b arranged oppositely, and the fifth edge 22a is farther from the electrode assembly 10 than the sixth edge 22b. In the second direction Y, a distance by which the fourth end 60c extends beyond the fifth edge 22a is L3, where 0.05 mm ≤ L3 ≤ 2 mm. In the second direction Y, a distance by which the ninth end 70c extends beyond the fifth edge 22a is L7, where 0.05 mm ≤ L7 ≤ 2 mm. When L3 and L7 are within the above ranges, parts of the first insulating layer 60 and the second insulating layer 70 are exposed outside the packaging bag 20, which can reduce the risk of misaligned sealing at the edge of the packaging bag 20 during packaging, facilitating sealing. Moreover, the smaller the exposed length of the first insulating layer 60 and the second insulating layer 70, the less space the first insulating layer 60 and the second insulating layer 70 occupy, which is more conducive to improving energy density.

Referring to FIG. 1, in the third direction X, the first metal plate 30 includes a fifth end 30a and a sixth end 30b opposite to each other, the first insulating layer 60 includes a first end 60a located on the side of the fifth end 30a and a seventh end 60d located on the opposite side of the first end 60a and on the side of the sixth end 30b. In the third direction X, a distance by which the first end 60a extends beyond the fifth end 30a is W3, and a distance by which the seventh end 60d extends beyond the sixth end 30b is W4, where 0.5 mm ≤ W3 ≤ 3 mm and 0.5 mm ≤ W4 ≤ 3 mm. The second metal plate 40 includes a tenth end 40a and an eleventh end 40b opposite to each other, and the second insulating layer 70 includes a second end 70a located on the side of the tenth end 40a and a twelfth end 70d located on the opposite side of the second end 70a and on the side of the eleventh end 40b. In the third direction X, a distance by which the second end 70a extends beyond the tenth end 40a is 0.5 mm to 3 mm, and a distance by which the twelfth end 70d extends beyond the eleventh end 40b is 0.5 mm to 3 mm. When a distance between the edges of the metal plate and the insulating layer in the third direction X satisfies the above ranges, it facilitates improving sealing strength.

Referring to FIG. 1, in the second direction Y, the electrode assembly 10 includes a seventh edge 10a close to the first insulating layer 60, and the seventh edge 10a, the third end 60b, and the eighth end 70b are located on the same side of the secondary battery 100 in the second direction Y. In the second direction Y, a distance by which the third end 60b extends beyond the seventh edge 10a is L4, and a distance by which the eighth end 70b extends beyond the seventh edge 10a is L8, where -2.5 mm ≤ L4 ≤ 1 mm and -2.5 mm ≤ L8 ≤ 1 mm. When L4/L8 is less than 0, in the second direction Y, the first insulating layer 60/second insulating layer 70 is separated from the electrode assembly 10; when L4/L8 is equal to 0, in the second direction Y, the edge of the first insulating layer 60/second insulating layer 70 is in contact with the edge of the electrode assembly 10; and when L4/L8 is greater than 0, when viewed along the first direction Z, the first insulating layer 60/second insulating layer 70 and the electrode assembly 10 have an overlapping portion. When L4/L8 is within the above range, the risk of wrinkles at the electrode sheet of the electrode assembly 10 due to contact between the first insulating layer 60/second insulating layer 70 and the electrode assembly 10 or the risk of issues such as lithium precipitation caused by the first insulating layer 60/second insulating layer 70 covering the electrode sheet due to excessive contact between the first insulating layer 60/second insulating layer 70 and the electrode assembly 10 can be reduced.

Referring to FIG. 1, in the second direction Y, the sealing film 50 does not overlap with the electrode assembly 10 to reduce the risk of wrinkles at the electrode sheet of the electrode assembly 10 due to contact with the sealing film 50.

In the secondary battery 100 provided by this application, the first metal plate 30 and the second metal plate 40 extend from the same side of the secondary battery 100 and are separated by the sealing film 50 disposed between the first insulating layer 60 and the second insulating layer 70, such that when the distance between the first metal plate 30 and the second metal plate 40 is less than 1.5 mm, short circuit caused by contact between the first metal plate 30 and the second metal plate 40 is prevented, meeting the requirements for ultra-narrow batteries. Additionally, the sealing film 50 is bonded to the first insulating layer 60 and the second insulating layer 70, which facilitates improving sealing strength.

An embodiment of this application also provides an electronic device including any of the secondary batteries described above. The electronic device of this application may include, but is not limited to, wearable electronic products, such as watches, glasses, smart clothing, and the like.

The descriptions disclosed above are merely preferred embodiments of this application, and certainly cannot constitute any limitation on this application. Accordingly, equivalent changes made in accordance with this application still fall within the scope of this application.

## Claims

1. A secondary battery, comprising:
an electrode assembly;
a packaging bag, comprising a first packaging portion and a second packaging portion arranged oppositely, the first packaging portion comprising a first region and a second region connected to each other, the second packaging portion comprising a third region and a fourth region connected to each other, wherein the second region and the fourth region arranged along a first direction form a main body portion for accommodating the electrode assembly, the first region and the third region are connected to form a sealing portion for sealing the main body portion, the sealing portion comprising a first sealing portion and a second sealing portion that are located on the same side of the secondary battery, and the first direction is a thickness direction of the electrode assembly;
a first metal plate, electrically connected to the electrode assembly and extending out of the packaging bag through the first sealing portion along a second direction perpendicular to the first direction;
a second metal plate, electrically connected to the electrode assembly and extending out of the packaging bag through the second sealing portion along the second direction, wherein in a third direction perpendicular to the first direction and the second direction, a distance between the first metal plate and the second metal plate is less than 1.5 mm;
a first insulating layer, covering a surface of the first metal plate and connected to the first region;
a second insulating layer, covering a surface of the second metal plate and connected to the third region; and
a sealing film, wherein the sealing film is disposed between the first insulating layer and the second insulating layer along the first direction, the sealing film comprises a first surface facing the first region and a second surface facing the third region, the first surface is bonded to the first insulating layer to form the first sealing portion, and the second surface is bonded to the second insulating layer to form the second sealing portion.

2. The secondary battery according to claim 1, wherein the first surface is bonded to the first region, and the second surface is bonded to the third region.

3. The secondary battery according to claim 1, wherein when viewed along the first direction, the first metal plate and the second metal plate have an overlapping portion.

4. The secondary battery according to claim 1, wherein in the third direction, the sealing film comprises a first edge and a second edge opposite to each other, the first insulating layer comprises a first end located on the side of the first edge, and the second insulating layer comprises a second end located on the side of the second edge; and in the third direction, a distance by which the first edge extends beyond the first end is W1, and a distance by which the second edge extends beyond the second end is W2, wherein W1 ≥ 1 mm and W2 ≥ 1 mm.

5. The secondary battery according to claim 1, wherein the sealing film comprises a third edge and a fourth edge arranged oppositely in the second direction, and in the second direction, the third edge is closer to the electrode assembly than the fourth edge; and the first insulating layer comprises a third end and a fourth end arranged oppositely in the second direction, and in the second direction, the third end is closer to the electrode assembly than the fourth end.

6. The secondary battery according to claim 5, wherein in the second direction, a distance by which the third edge extends beyond the third end is L1, and a distance by which the fourth edge extends beyond the fourth end is L2, wherein -1.5 mm ≤ L1 ≤ 0.5 mm and -1.5 mm ≤ L2 ≤ 0.5 mm.

7. The secondary battery according to claim 5, wherein the sealing portion comprises a fifth edge and a sixth edge arranged oppositely in the second direction, and in the second direction, the fifth edge is farther from the electrode assembly than the sixth edge; and in the second direction, a distance by which the fourth end extends beyond the fifth edge is L3, wherein 0.05 mm ≤ L3 ≤ 2 mm.

8. The secondary battery according to claim 1, wherein in the third direction, the first metal plate comprises a fifth end and a sixth end opposite to each other, the first insulating layer comprises a first end located on the side of the fifth end and a seventh end located on the side of the sixth end; and in the third direction, a distance by which the first end extends beyond the fifth end is W3, and a distance by which the seventh end extends beyond the sixth end is W4, wherein 0.5 mm ≤ W3 ≤ 3 mm and 0.5 mm ≤ W4 ≤ 3 mm.

9. The secondary battery according to claim 5, wherein the electrode assembly comprises a seventh edge, the seventh edge and the third end are located on the same side of the secondary battery in the second direction; and in the second direction, a distance by which the third end extends beyond the seventh edge is L4, wherein -2.5 mm ≤ L4 ≤ 1 mm.

10. The secondary battery according to claim 1, wherein in the second direction, the sealing film does not overlap with the electrode assembly.

11. The secondary battery according to claim 1, wherein the sealing film comprises a first layer, a second layer, and a third layer arranged in a stacked manner.

12. The secondary battery according to claim 11, wherein the first layer and the third layer each independently comprise at least one of polypropylene, modified polypropylene, polyethylene, ethylene-propylene copolymer, ethylene-vinyl acetate copolymer, or ethylene-ethyl acrylate copolymer.

13. The secondary battery according to claim 11, wherein the second layer comprises a metal layer.

14. The secondary battery according to claim 1, wherein the packaging bag is an aluminum-plastic film or a steel-plastic film.

15. The secondary battery according to claim 1, wherein the first insulating layer and the second insulating layer each independently comprise at least one of polyethylene, polypropylene, polyethylene terephthalate, phenolic resin, melamine resin, unsaturated polyester resin, epoxy resin, silicone resin, or polyurethane.

16. An electronic device, comprising the secondary battery according to any one of claims 1 to 15.
